# EUROPÄISCHE PATENTSCHRIFT

(11) **EP 1 599 520 B1**
(45) Veröffentlichungstag und Bekanntmachung des Hinweises auf die Patenterteilung: **25.07.2012**
(21) Anmeldenummer: 04711309.7
(22) Anmeldetag: 14.02.2004
(51) Int. Cl.: C08G 18/08, C09D 175/04, B01F 5/06, B01F 5/08

(54) **VERFAHREN UND VORRICHTUNG ZUR HERSTELLUNG EINES ZWEIKOMPONENTEN-LACKGEMISCHS**
METHOD AND DEVICE FOR PRODUCING A TWO-COMPONENT LACQUER MIXTURE
PROCEDE ET DISPOSITIF POUR PRODUIRE UN MELANGE DE LAQUE A DEUX COMPOSANTES

(30) Priorität: 28.02.2003 DE 10308755; 21.05.2003 DE 10322998
(43) Veröffentlichungstag der Anmeldung: 30.11.2005
(73) Patentinhaber: Bayer Technology Services GmbH, 51368 Leverkusen (DE)
(72) Erfinder: NOLTE, Hans-Jürgen, 74354 Besigheim (DE); KRUMMA, Harry, 74357 Bönnigheim (DE); HERRE, Frank, 71739 Oberriexingen (DE); KLINKSIEK, Bernd, 51429 Bergisch Gladbach (DE); OBENDORF, Lars, 51065 Köln (DE); YUVA, Nusret, 51399 Burscheid (DE); MECHTEL, Markus, 51467 Bergisch Gladbach (DE)
(86) Internationale Anmeldenummer: PCT/EP2004/001401
(87) Internationale Veröffentlichungsnummer: WO 2004/076515

(56) Entgegenhaltungen:
- EP-A- 0 685 544
- EP-A- 0 943 664
- DE-A- 19 933 440
- DE-A- 19 933 441

## Beschreibung

Die Erfindung betrifft ein Verfahren zur Herstellung eines Zweikomponenten-Lackgemischs, insbesondere zur Herstellung wässriger Zweikomponenten-Polyurethan-Lackemulsionen aus einer isocyanatreaktive Wasserstoffatome aufweisenden, wässrigen Bindemitteldispersion und einem Polyisocyanat durch Vermischen des Polyisocyanats und der Bindemitteldispersion. Die Erfindung betrifft ferner eine Vorrichtung zur Durchführung des Verfahrens.

Da Zweikomponenten-Polyurethanlacke (2K-PUR-Lacke) nur eine begrenzte Verarbeitungszeit (Topfzeit) haben, werden die beiden Komponenten der Lacke erst kurz vor der Applikation vermischt. Je nach Reaktivität der Lacksysteme kann die Topfzeit mehrere Minuten bis Stunden betragen.

Während solche Zweikomponenten-Systeme in der Vergangenheit in organischen Lösungsmitteln gelöst eingesetzt wurden, sind in neuerer Zeit eine Vielzahl von wasserdispergierbaren Zweikomponenten-Systemen entwickelt worden. Die wasser-dispergierbaren Zweikomponenten-Systeme bestehen in der Regel aus einer Hydroxylgruppen aufweisenden Harzkomponente (Binder, Polyol) und einer Polyisocyanatkomponente (Härter, Vernetzer). Dabei liegt die hydroxyfunktionelle Harzkomponente in der Regel als wässrige Dispersion, die Polyisocyanatkomponente als wasserfreie 100 %ige Komponente oder in einem Lösemittel gelöst vor. Solche, auch im Rahmen der vorliegenden Erfindung einsetzbaren Systeme, sind z.B. in EP-A 358 979, 496 205, 469 389, 520 266, 540 985, 542 105, 543 228, 548 669, 562 282 und 583 728 offenbart. Nachteilig an diesen Lacksystemen ist, dass die von den Zweikomponenten-Systemen auf Basis rein organischer Lösungsmittel bekannte Lackqualität in einigen Anwendungsbereichen noch nicht erreicht wird. Dieses gilt vor allem für Anwendungsbereiche, in denen besonders hohe Anforderungen an die optischen Eigenschaften und die Beständigkeit gefordert werden.

Es ist bekannt, qualitativ hochwertige Lackoberflächen mit Lackdispersionen zu erzielen, die möglichst kleine Teilchengrößen aufweisen. In wässrigen Zweikomponenten-Polyurethan-Lacken werden daher in der Regel Polyoldispersionen mit hinreichend kleiner Teilchengröße von unter 500 nm, bevorzugt 10 - 200 nm, eingesetzt. Die Dispergierung der an sich hydrophoben Isocyanatkomponente erfolgt erst kurz vor der Applikation der Lacke, da die Polyisocyanatkomponente mit Wasser reagiert und daher nur eine begrenzte Lagerstabilität in Gegenwart von Wasser aufweist.

Es wurden auch Polyisocyanate entwickelt, die entweder durch chemische Modifizierung hydrophiliert sind oder externe Emulgatoren enthalten. Diese lassen sich zwar deutlich einfacher mit statischen Mischvorrichtungen auf eine mittlere Teilchengröße von unter 1 000 nm dispergieren, die ausgehärteten Lackfilme jedoch zeigen für viele Anwendungsbereiche nur eine unzureichende Beständigkeit. Lackfilme mit guter Beständigkeit werden dagegen nur durch Einsatz hydrophober Polyisocyanatkomponenten erhalten.

Vor dem Hintergrund, dass die Dispergierbarkeit der Isocyanatkomponente durch die Stabilisierungsreaktion, die auf der Oberfläche bereits vorhandener Teilchen stattfindet, begrenzt wird, muss eine möglichst feinteilige Dispergierung möglichst rasch erfolgen. Die Dispergierung muss daher innerhalb von so kurzer Zeit erfolgen, dass noch keine merkliche Oberflächenstabilisierung stattgefunden hat. Insbesondere sollte während der Dispergierung auch eine Erwärmung vermieden werden, weil dadurch die Reaktion der Polyisocyanatkomponente mit Wasser beschleunigt wird.

Aus EP-B 0 685 544 ist ein Verfahren zur Herstellung wässriger Zweikomponenten-Polyurethan-Lackemulsionen auf Basis isocyanatreaktive Wasserstoffatome aufweisender Bindemittelharze und Polyisocyanate durch Vermischen der Komponenten mit Wasser bekannt. Im kontinuierlichen Betrieb wird eine Polyol-Wasser-Dispersion einerseits und ein Polyisocyanat andererseits einem Strahldispergator zur Dispergierung zugeführt. Zur feinteiligen Emulgierung des Polyisocyanats mit einer Partikelgröße von ca. 0,5 µm in der wässrigen Polyolemulsion mit einer Partikelgröße von ca. 0,2 µm sind Homogenisierdrücke von etwa 5 MPa erforderlich. Die Stabilisierung der Isocyanatpartikel erfolgt durch die ionisch modifizierten Polyolpartikel. Ein Emulgator ist nicht notwendig.

Auf die vorgenannte EP-B 0 685 544 nimmt auch die EP-A 0 943 664 bezug. Diese beschreibt Nanopartikel-haltige transparente Lackbindemittel, die durch Düsenstrahldispergierung der nanoskaligen Teilchen in den Bindemitteln erhalten werden. Die EP-A 0 943 664 beschreibt auch hierfür eingesetzte Düsenstrahldispergatoren.

Des Weiteren ist aus DE-A 19 933 441 ein Verfahren zur Herstellung wässriger Zweikomponenten-Polyurethan-Lackemulsionen auf Basis isocyanatreaktive Gruppen aufweisender wässriger Bindemitteldispersionen und Polyisocyanate durch Vermischen der beiden Komponenten unter einem Druck von 1 bis 30 MPa in einem verstellbaren Strahldispergator mit zu- oder abschaltbaren Düsenbohrungen oder Schlitzen gemäß DE-A 199 33 440 bekannt. Dabei wird zunächst bei einem verhältnismäßig geringen Druck von z.B. 0,1 MPa eine Voremulsion hergestellt. Anschließend erfolgt die Homogenisierung bei einem Druck von 1 bis 30 MPa in einem regelbaren Strahldispergator. Durch Verstellen des geregelten Steuerkolbens mit Hilfe eines Pneumatikzylinders wird entweder eine bestimmte Anzahl von Bohrungen oder eine bestimmte Länge des Schlitzes freigegeben. Hierdurch wird, bei kontinuierlich variierbarem Mengendurchsatz des Dispergiergutes, eine gleichbleibend gute Dispergierqualität erzeugt. DE-A 19 933 441 liefert jedoch keine Angaben über den Mengendurchsatz des Dispergiergutes, bei dem eine gleichbleibend feinteilige Dispersion erzielt wird. In DE-A 199 33 441 ist außerdem beispielhaft eine Ausführungsform für die Autoerstlackierung offengelegt.

In modernen Lackieranlagen, beispielsweise in der Automobilerstlackierung, erfolgt die Applikation des Klarlacks zunehmend elektrostatisch mittels Roboter. Bei der Applikation des Lacks wird die Zerstäuberglocke von einem Roboterarm entlang der Automobilkarosse geführt. Um lange Leitungswege und ein damit verbundenes hohes Spül- und Abfallvolumen zu minimieren, ist es vorteilhaft, wenn die Emulgierung des Polyisocyanats in der wässrigen Polyolkomponente kontinuierlich unmittelbar vor Einleitung in die Zerstäuberglocke auf dem Roboterarm erfolgt. Um dies zu realisieren, müssen sowohl die Dispergierdüse als auch die zur Förderung und dem Druckaufbau benötigten Pumpen ausreichend klein und leicht sein, damit sie in den Roboter integriert werden können. In der Automobilerstlackierung werden deshalb bevorzugt Zahnradpumpen für die Klarlackapplikation eingesetzt.

Bei dem in der Automobilerstlackierung üblichen Bereich für die Klarlackviskosität und den üblichen Abnahmemengen können derzeit übliche Zahnradpumpen bis zu einem Förderdruck von maximal 2,5 MPa sinnvoll eingesetzt werden. Bedingt durch die Geometrie der Autokarosse schwankt die Abnahmemenge einer Zerstäuberglocke innerhalb von sehr kurzen Zeitabständen, so dass die Abnahmemenge des Dispergiergutes entsprechend schnell regelbar sein muss. Typische Abnahmemengen einer Zerstäuberglocke bei der Automobilerstlackierung liegen im Bereich von 50 bis 400 g/min.

Ein Nachteil der bekannten Dispergiervorrichtungen und Dispergierverfahren ist der verhältnismäßig hohe Druck, der zur Herstellung feinteiliger Emulsionen benötigt wird. Gemäß DE-A 199 33 440 erzeugen die beiden Pumpen zur Förderung der Bindemittelkomponente und des Härters den notwendigen Differenzdruck sowohl für die vorgeschaltete Mischdüse als auch für die verstellbare Homogenisierdüse. Für die verstellbare Dispergiervorrichtung ist ein Differenzdruck von 5 MPa angegeben. Zahnradpumpen sind daher für einen solchen Dispergierdruck nicht geeignet. Andere Pumpen, wie beispielsweise Membrankolbenpumpen, erfordern aufgrund ihrer Baugröße und ihres Gewichtes eine externe Anordnung mit den zuvor beschriebenen Nachteilen.

Ein weiterer Nachteil der bekannten Verfahren besteht darin, dass bei geringen Durchsätzen einer kompletten Anlage mit mehreren Zerstäuberglocken in der Größenordnung von 400 bis 500 g/min die Dispergierqualität deutlich abnimmt, so dass die hohen Anforderungen an die optischen Eigenschaften, wie sie bei der Automobillackierung erforderlich sind, nicht erfüllt werden.

Ungünstig an der in DE-A 199 33 441 beschriebenen Dispergiervorrichtung ist außerdem, dass diese vorzugsweise aus einer Keramikhülse mit Homogenisierbohrungen und einem in der Kammer verschiebbar angeordnetem Keramikkolben besteht. Die Keramikbauteile müssen sehr passgenau eingeschliffen sein, um einen Leckstrom zwischen Kolben und Hülse zu vermeiden. Vorteilhaft wäre eine Dispergiervorrichtung, die ohne bewegbare und passgenau geschliffene Bauteile auskommt.

Aufgrund der zuvor beschriebenen Nachteile der bekannten Dispergierverfahren und -vorrichtungen kann eine Applikation von wässrigen Zweikomponenten-Polyurethan-Lackemulsionen mit Hilfe eines Roboters nicht oder nur mit großen Nachteilen realisiert werden.

Aufgabe der vorliegenden Erfindung ist es daher, ein Verfahren zur Herstellung einer wässrigen Zweikomponenten-Polyurethan-Lackemulsion aus einer isocyanatreaktive Wasserstoffatome aufweisenden, wässrigen Bindemitteldispersion und einem Polyisocyanat durch Emulgieren des Polyisocyanats und der Bindemitteldispersion bereit zu stellen, das die zuvor genannten Nachteile nicht aufweist. Das Verfahren soll bei verhältnismäßig geringen Dispergierdrücken und verhältnismäßig geringem Mengendurchsatz des Dispergiergutes eine feinteilige Emulsion erzeugen.

Eine weitere Aufgabe der Erfindung besteht darin, eine Vorrichtung zur Herstellung einer wässrigen Zweikomponenten-Polyurethan-Lackemulsion aus einer isocyanatreaktive Wasserstoffatome aufweisenden, wässrigen Bindemitteldispersion und einem Polyisocyanat durch Emulgieren des Polyisocyanats und der Bindemitteldispersion zur Verfügung zu stellen, die bei verhältnismäßig niedrigen Dispergierdrücken und einem verhältnismäßig geringen Mengendurchsatz des Dispergiergutes eine gleichbleibend gute Emulsionsqualität erzeugt.

Diese Aufgabe wird, ausgehend von dem vorstehend beschriebenen bekannten Verfahren gemäß dem Oberbegriff des Anspruchs 1, durch die kennzeichnenden Merkmale des Anspruchs 1 und - hinsichtlich einer entsprechenden Vorrichtung - durch die Merkmale des Anspruchs 9 gelöst.

Gegenstand der Erfindung ist demnach ein Verfahren zur Herstellung eines Zweikomponenten-Lackgemischs und insbesondere einer wässrigen Zweikomponenten-Polyurethan-Lackemulsion aus einer isocyanatreaktive Wasserstoffatome aufweisenden, wässrigen Bindemitteldispersion und einem Polyisocyanat durch Vermischen des Polyisocyanats und der Bindemitteldispersion, wobei vorzugsweise die folgenden Schritte ausgeführt werden:
a) Mischung einer ersten Lackkomponente und einer zweiten Lackkomponente in einem Mischer zu dem Zweikomponenten-Lackgemisch,
b) Homogenisierung des Zweikomponenten-Lackgemischs durch einen Homogenisierer, wobei das Zweikomponenten-Lackgemisch mindestens teilweise mehrfach hintereinander homogenisiert wird, wobei ein Teil des Zweikomponenten-Lackgemischs vom Ausgang des Homogenisierers zum Eingang des Homogenisierers zurückgeführt wird.

Bei der ersten Lackkomponente handelt es sich vorzugsweise um eine isocyanatreaktive Wasserstoffatome aufweisende, wässrige Bindemitteldispersion, während die zweite Lackkomponente vorzugsweise Polyisocyanat enthält. Die Erfindung ist jedoch nicht auf diese konkreten Lackkomponenten beschränkt, sondern auch mit anderen Lackkomponenten realisierbar. Im Folgenden wird die Erfindung jedoch zur Vereinfachung anhand der vorstehend erwähnten bevorzugten Lackkomponenten beschrieben.

Im Rahmen der Erfindung können beispielsweise auch alle bisher schon für Zweikomponenten-Polyurethan-Lacke eingesetzten Bindemittel und Vernetzerkomponenten, wie sie beispielsweise aus EP-A 358 979, EP 496 205, EP 469 389, EP 520 266, EP 540 985, EP 542 105, EP 543 228, EP 548 669, EP 562 282 und EP 583 728 bekannt sind, eingesetzt werden.

Als isocyanatreaktive Wasserstoffatome aufweisende, wässrige Bindemitteldispersion eignen sich z.B. isocyanatreaktive Gruppen aufweisende Polyacrylate, Polyester, Urethan-modifizierte Polyester, Polyether, Polycarbonate oder Polyurethane, inbesondere solche mit einem Molekulargewichtsbereich von 1 000 bis 10 000 g/mol. Als isocyanatreaktive Gruppen werden bevorzugt Hydroxylgruppen eingesetzt. Die Bindemittelharze werden als wässrige Dispersionen eingesetzt.

Als Polyisocyanatkomponente sind beliebige organische Polyisocyanate mit aliphatisch, cycloaliphatisch, araliphatisch und/oder aromatisch gebundenen, freien Isocyanatgruppen geeignet. Die Polyisocyanatkomponente sollte im Allgemeinen eine Viskosität von 20 bis 1 000 mPa·s, vorzugsweise von unterhalb 500 mPa·s, aufweisen. Jedoch können auch höherviskose Polyisocyanate eingesetzt werden, wenn die Viskosität der Polyisocyanatkomponente durch einen entsprechenden Lösungsmittelgehalt herabgesetzt ist.

Besonders bevorzugt werden als Polyisocyanate solche mit ausschließlich aliphatisch und/oder cycloaliphatisch gebundenen Isocyanatgruppen mit einer zwischen 2,2 und 5,0 liegenden mittleren NCO-Funktionalität und einer Viskosität von 50 bis 500 mPa·s bei 23°C eingesetzt. Bei entsprechend niedriger Viskosität gelingt erfindungsgemäß eine Dispergierung mit hinreichend kleiner Teilchengröße völlig ohne Lösungsmittelzusatz.

Ferner können die in der Lackchemie bekannten üblichen Zusatz- und Modifizierungsmittel eingesetzt werden.

Die mehrfache Homogenisierung des Zweikomponenten-Lackgemischs wird erfindungsgemäß dadurch erreicht, dass mittels einer Rückführleitung ein Teil des homogenisierten Zweikomponenten-Lackgemischs vom Ausgang des Homogenisierers zum Eingang des Homogenisierers zurückgeführt wird. Der zurückgeführte Teil des Zweikomponenten-Lackgemischs durchläuft den Homogenisierer also mehrfach, wodurch der Homogenisierungsgrad des Zweikomponenten-Lackgemischs am Ausgang des Homogenisierers deutlich erhöht wird. Vorzugsweise durchläuft das Zweikomponenten-Lackgemisch den Homogenisierer mindestens zweimal, jedoch sind im Rahmen der Erfindung auch wesentlich höhere Durchlaufzahlen möglich.

Der Mischer ist vorzugsweise als Mischdüse ausgebildet, wobei sich beispielsweise eine Glattstrahldüse eignet. Ferner kann eine Mischdüse verwendet werden, die analog der Voremulgierung in dem aus DE 195 10 651 bekannten Strahldispergator funktioniert. Die Erfindung ist jedoch hinsichtlich der Bauart des Mischers nicht auf eine Mischdüse beschränkt, sondern auch in anderer Weise realisierbar.

Der Homogenisierer ist dagegen vorzugsweise als Strahldispergator ausgeführt, in dem das Zweikomponenten-Lackgemisch aufgrund der auftretenden Scherkräfte homogenisiert wird. Als Strahldispergator kann beispielsweise der aus DE 195 10 651 bekannte Strahldispergator eingesetzt werden. Die Erfindung ist jedoch hinsichtlich der Bauart des Homogenisierers nicht auf einen Strahldispergator beschränkt, sondern auch in anderer Weise realisierbar. Alternativ können auch Spaltdüsen, Ringschlitzdüsen oder Lochdüsen verwendet werden.

Die beiden Lackkomponenten werden dem Mischer vorzugsweise getrennt durch jeweils eine Pumpe zugeführt, wobei der Druck vorzugsweise maximal 2,5 MPa beträgt.

Darüber hinaus ist vorzugsweise eine weitere Pumpe vorgesehen, die zwischen dem Mischer und dem Homogenisierer angeordnet ist, wobei diese Pumpe vorzugsweise eine größere Förderleistung aufweist als die beiden Pumpen für die Zuführung der beiden Lackkomponenten zu dem Mischer zusammen. Dies ist vorteilhaft, da die Pumpe zwischen dem Mischer und dem Homogenisierer nicht nur von dem Mischer versorgt wird, sondern über die Rückführleitung auch einen Teil des Zweikomponenten-Lackgemischs vom Ausgang des Homogenisierers fördert.

Gemäß Schritt a) des erfindungsgemäßen Verfahrens werden die isocyanatreaktive Wasserstoffatome aufweisende, wässrige Bindemitteldispersion und das Polyisocyanat also vorzugsweise getrennt voneinander mit Hilfe von jeweils einer Pumpe der Mischdüse zur Herstellung der Voremulsion zugeführt. Vorzugsweise beträgt der Druck dieser Pumpen jeweils maximal 2,5 MPa, vorzugsweise von 0,001 bis 2 MPa. Der niedrige Druck erlaubt es, Pumpentypen zu wählen, die eine verhältnismäßig kleine Baugröße aufweisen. In einer bevorzugten Ausführungsform des erfindungsgemäßen Verfahrens handelt es sich bei den Pumpen um Zahnradpumpen. Diese sind verhältnismäßig klein und leicht, so dass sie in einem Roboterarm einer Lackieranlage untergebracht werden können.

Gemäß Schritt b) des erfindungsgemäßen Verfahrens erfolgt die Homogenisierung der Voremulsion vorzugsweise in einer Homogenisierdüse ebenfalls bei einem Druck von maximal 2,5 MPa, vorzugsweise von 0,001 bis 2 MPa, wobei die Voremulsion der Homogenisierdüse vorzugsweise mit einer weiteren Pumpe, welche der Mischdüse nachgeschaltet ist, zugeführt wird. Aufgrund des geringen Druckes ist es auch hier möglich, Pumpentypen zu wählen, die eine verhältnismäßig kleine Baugröße aufweisen. In einer bevorzugten Ausführungsform des erfindungsgemäßen Verfahrens handelt es sich bei der Pumpe daher ebenfalls um eine Zahnradpumpe. Da diese verhältnismäßig klein und leicht ist, kann sie in einem Roboterarm einer Lackieranlage untergebracht werden. Somit kann in einer bevorzugten Ausführungsform des Verfahrens die zur Herstellung der Lackemulsion benötigte Apparatur wenigstens bestehend aus einer Mischdüse, einer Homogenisierdüse und drei Pumpen an einem Applikationsgerät, wie beispielsweise einem Roboter oder einem Roboterarm, angeordnet werden. Dies hat den Vorteil, dass kürzere Zuleitungen benötigt werden und der Spülaufwand für die Vorrichtung geringer ist als bei den aus dem Stand der Technik bekannten Verfahren.

Vorzugsweise ist der Förderstrom der der Mischdüse nachgeschalteten Pumpe größer als die Summe der Förderströme der Pumpen, mit denen die Bindemitteldispersion und das Polyisocyanat der Mischdüse zugeführt werden. Ist die dosierte Menge an Lackemulsion niedriger als der Volumenstrom der der Mischdüse nachgeschalteten Pumpe, wird der überschüssige Teil der Lackemulsion zurückgeführt. Je geringer der Volumenstrom der Voremulsion, d.h. je geringer der Förderstrom der Pumpen, welche die Bindemitteldispersion und das Polyisocyanat der Mischdüse zuführen, desto häufiger wird die Lackemulsion rückgeführt und erneut in der Homogenisierdüse homogenisiert. Da bei geringen Volumenströmen der Voremulsion und geringen Drücken verhältnismäßig grobe Lackemulsionen entstehen, können auf diese Weise durch mehrfache Homogenisierung feinteilige Lackemulsionen gewonnen werden. Durch die mehrfache Homogenisierung der Voremulsion ändert sich die Häufigkeitsverteilung der Partikelgröße. Die Häufigkeitsverteilung wird enger, da der Anteil am grobteiligen Rand des Partikelspektrums zu geringeren Teilchengrößen verschoben wird.

Vorzugsweise beträgt der Volumenstrom der Voremulsion von 50 bis 3000 g/min. Bei diesen Volumenströmen werden feinteilige Lackemulsionen erzielt. Der Volumenstrom der Voremulsion kann im Wesentlichen konstant oder diskontinuierlich oder kontinuierlich veränderbar sein. Der Bereich, innerhalb dessen der Volumenstrom bei gleichbleibend feinteiliger Emulsionsbildung kontinuierlich veränderbar ist, ist u.a. von der Düsengeometrie abhängig.

Ein weiterer Vorteil des erfindungsgemäßen Verfahrens bzw. der erfindungsgemäßen Vorrichtung liegt darin, dass die dosierte Menge Lackemulsion variiert werden kann, ohne dass bewegbare oder verschiebbare Bauteile, z.B. ein in einer Hülse verschiebbarer Kolben als Strahldispergator, eingesetzt werden müssen. Dies reduziert den Wartungsaufwand für die erfindungsgemäße Vorrichtung gegenüber den aus dem Stand der Technik bekannten Vorrichtungen.

Es ist auch möglich, das erfindungsgemäße Verfahren wenigstens bestehend aus der Herstellung der Voremulsion (Schritt a) und der Homogenisierung der Voremulsion (Schritt b) nicht kontinuierlich, sondern batchweise in zwei getrennten Schritten durchzuführen.

Die nach dem erfindungsgemäßen Verfahren erhaltene Lackemulsion wird nach dem Austritt aus der Homogenisierdüse möglichst unmittelbar einer geeigneten Dosiervorrichtung, beispielsweise einer Zerstäuberdüse, zugeführt.

Das erfindungsgemäße Verfahren hat den Vorteil, dass selbst bei verhältnismäßig geringem Durchsatz des Dispergiergutes von 50 g/min bis 3000 g/min und verhältnismäßig geringen Drücken von maximal 2,5 MPa feinteilige Lackemulsionen mit einer Anzahlverteilung d₉₀ von maximal 2,5 µm erhalten werden.

Die nach dem erfindungsgemäßen Verfahren erhaltene Emulsion eignet sich zur Herstellung von hochwertigen Überzügen auf verschiedensten Substraten und Materialien wie Holz, Metallen, Kunststoffen usw.. Vorzugsweise werden die Beschichtungssysteme zur Lackierung von Karosserien oder Karosserieteilen in der Autoerstlackierung eingesetzt.

Die Erfindung wird nachfolgend anhand der Zeichnungen näher erläutert. Es zeigen:
- Fig. 1: eine schematische Darstellung der erfindungsgemäßen Vorrichtung,
- Fig. 2: den Mischer der Vorrichtung aus Figur 1 zur Herstellung der Voremulsion nach dem erfindungsgemäßen Verfahren,
- Fig. 3: den Homogenisierer der Vorrichtung aus Figur 1 in Form eines Strahldispergators zur Herstellung der Lackemulsion nach dem erfmdungsgemäßen Verfahren,
- Fig. 4: ein alternatives Ausführungsbeispiel für den Mischer in Figur 1,
- Fig. 5: ein alternatives Ausführungsbeispiel für den Homogenisierer in Figur 1,
- Fig. 6: eine Abwandlung der Vorrichtung aus Figur 1,
- Fig. 7: ein alternatives Ausführungsbeispiel der Vorrichtung aus Figur 1 sowie
- Fig. 8: ein alternatives Ausführungsbeispiel für den Mischer in Figur 1.

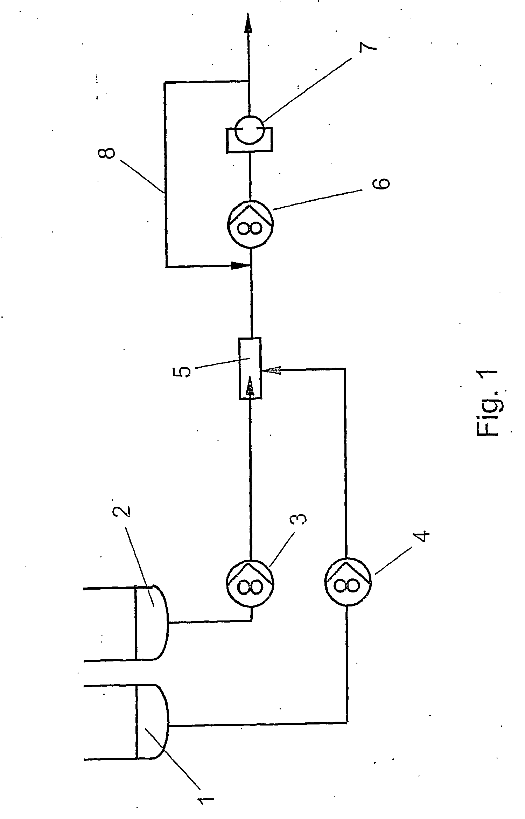

Die schematische Darstellung in Figur 1 zeigt zwei Vorratsbehälter für eine isocyanatreaktive Wasserstoffatome aufweisende, wässrige Bindemitteldispersion 1 sowie für ein Polyisocyanat 2.

Die beiden Vorratsbehälter sind über getrennte Zuleitungen und jeweils eine Dosierpumpe 3, 4 mit einem als Mischdüse ausgebildeten Mischer 5 verbunden, der die Bindemitteldispersion 1 mit dem Polyisocyanat 2 mischt und eine Voremulsion bildet. Als Dosierpumpen 3, 4 werden beispielsweise Zahnraddosierpumpen oder Kolbendosierer eingesetzt.

Zur Homogenisierung der Voremulsion wird diese von einer Pumpe 6 angesaugt und einem als Homogenisierdüse ausgebildeten Homogenisierer 7 zugeführt. Bei der Pumpe 6 handelt es sich beispielsweise um eine Zahnradpumpe oder einen Kolbendosierer.

Der Förderstrom der Pumpe 6 ist größer als die Summe der Förderströme der Dosierpumpen 3 und 4. Da die dosierte Lackemulsionsmenge niedriger ist als der Förderstrom der Pumpe 6, sorgt eine Rückführleitung 8 für einen Ausgleich, indem die nicht dosierte Menge Lackemulsion in den Homogenisierer 7 zurückgeführt wird. Je geringer der Förderstrom der Dosierpumpen 3 und 4, d.h. je geringer der Volumenstrom der Voremulsion, um so häufiger wird die Emulsion im statistischen Mittel im Kreislauf gepumpt und dabei mehrfach homogenisiert. Da bei geringeren Förderströmen gröbere Voremulsionen entstehen, wird so eine intensive Nachhomogenisierung erreicht.

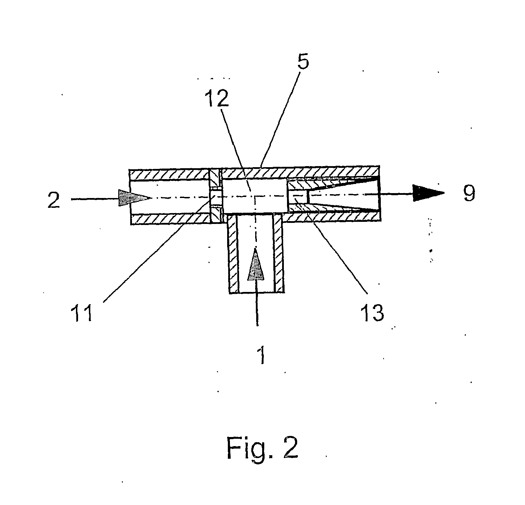

In Figur 2 ist eine Ausführungsform des Mischers 5 dargestellt, wie er zur Herstellung einer Voremulsion 9 nach Schritt a) des erfindungsgemäßen Verfahrens verwendet wird. Das Polyisocyanat 2 wird in dem Mischer 5 über eine Düsenbohrung 11 in die isocyanatreaktive Wasserstoffatome aufweisende Bindemitteldispersion 1, z.B. ein Polyol, in eine Vormischkammer 12 gedrückt. Das Polyisocyanat 2 und die Bindemitteldispersion 1 werden gemeinsam durch eine Düsenbohrung 13 gedrückt, wodurch eine Voremulsion 9 gebildet wird. Umgekehrt kann auch die isocyanatreaktive Wasserstoffatome aufweisende Bindemitteldispersion 1 in dem Mischer 5 in das Polyisocyanat 2 gedrückt werden.

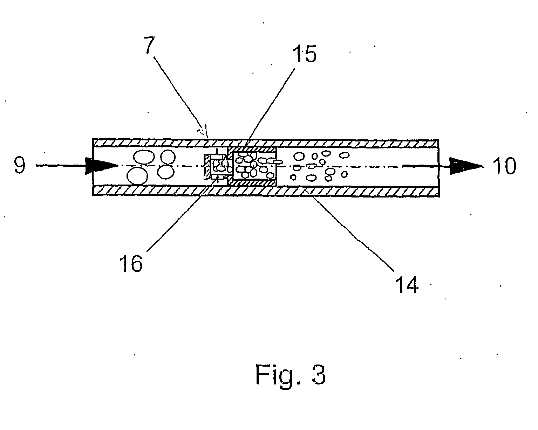

Gemäß Figur 3 tritt die Voremulsion 9 in den als Strahldispergator ausgbildeten Homogenisierer 7 ein, der aus einem Rohr und einem Einsatz 16 mit seitlichen Düsenbohrungen besteht. Die Voremulsion 9 wird durch die Düsenbohrungen gedrückt. Am gegenüberliegenden Ende tritt die Lackemulsion 10 aus dem Strahldispergator 7 aus. Ein solcher Strahldispergator ist aus DE 195 10 651 bekannt. Dem Prinzip nach ähnliche Strahldispergatoren können ebenso eingesetzt werden.

### Beispiele

Für die Ausführungsbeispiele sowie die Vergleichsbeispiele wird als isocyanatreaktive Wasserstoffatome aufweisende, wässrige Bindemitteldispersion folgende Rezeptur gewählt:
- 29,7 Gew.% einer OH-funktionellen Polyacrylatdispersion mit einem nichtflüchtigen Anteil (DIN EN ISO 3251) von ca. 46 Gew.-%, einer Viskosität (23°C, DIN EN ISO 3219) von maximal 1500 mPa·s und einem OH-Gehalt bezogen auf Festharz von 4,5 Gew.-%
- 29,7 Gew.% einer OH-funktionellen Polyurethandispersion mit einem nichtflüchtigen Anteil (DIN EN ISO 3251) von ca. 45 Gew.-%, einer Viskosität (23°C, DIN EN ISO 3219) von maximal 1200 mPa·s und einem OH-Gehalt bezogen auf Festharz von 3,8 Gew.-%
- 0,3 Gew.% Byk^{®} 345 (Byk Chemie GmbH, Deutschland)
- 0,3 Gew.% einer 25 Gew.-%igen wässrigen Lösung von Byk^{®} 333 (Byk Chemie GmbH)
- 9,4 Gew.-% destilliertes Wasser.

Als Polyisocyanat wird folgende Rezeptur gewählt:
- 18,7 Gew.% eines isocyanuratgruppenhaltigen Polyisocyanates auf Basis von 1,6-Diisocyanatohexan (HDI) mit einem NCO-Gehalt von 23,2 %, einer mittleren NCO-Funktionalität von 3,2 (nach Gelpermeationschromotographie), einem Gehalt an monomerem HDI von kleiner 0,25 % und einer Viskosität von 1200 mPa·s (23°C)
- 1,8 Gew.% Tinuvin^{®} 1130 (Ciba Spezialitätenchemie GmbH, Deutschland), 50 %ig in Rhodiasolv^{®} RP DE (Brenntag GmbH, Deutschland)
- 0,9 Gew.% einer 50 gew.-%igen Lösung von Tinuvin^{®} 292 (Ciba Spezialitätenchemie GmbH) in Rhodiasolv RP DE
- 9,2 Gew.% Colöser Rhodiasolv RP DE.

### Beispiel 1 (Ausführungsbeispiel):

Die als Zahnraddosierpumpen ausgeführten Dosierpumpen 3 und 4 (siehe Fig. 1) werden so geregelt, dass sich ein Gewichtsverhältnis von Polyolkomponente 1 zu Polyisocyanatkomponete 2 von 2,28 zu 1 einstellt. Die Volumenströme der Dosierpumpen 3 und 4 wurden im Bereich von 200 bis 800 g/min variiert, während die als Zahnradpumpe ausgeführte Pumpe 6 auf einen Volumenstrom eingestellt war, der größer war als die Summe der Volumenströme der Dosierpumpen 3 und 4. Der Mischer 5 wies eine Düsenbohrung 11 mit 0,4 mm und eine Düsenbohrung 13 mit 0,6 mm auf. Der Strahldispergator 7 war mit zwei Düsenbohrungen 16 mit je 0,6 mm ausgestattet.

Mit den so hergestellten wässrigen Zweikomponenten-Polyurethandispersionen wurden folgende Untersuchungen zur Beurteilung der Dispergier- und Lackqualität durchgeführt:
Test A: Es wurde ein Film der Lackemulsion mit einer Nassfilmschichtdicke von 90 µm auf eine Glasplatte aufgezogen. Beurteilt wurde die Transparenz, Schnee und Stippen des Nassfilms bei Durchsicht mit Noten 0 bis 5 (0 = sehr gute Dispergierqualität, d.h. Film ist völlig transparent, keine Stippen, kein Schnee; 5 = sehr schlechte Dispergierqualität, der Film ist milchig und/oder hat sehr viele Stippen/Schnee)
Test B: Die auf die Glasplatte gerakelte wässrige Zweikomponenten-Polyurethandispersion wurde 30 min bei 130°C ausgehärtet. Beurteilt wurde die Filmoptik mit Noten 0 bis 5 (0 = sehr gute Filmoptik, d.h. Film ist völlig transparent, keine Stippen, kein Schnee; 5 = sehr schlechte Filmoptik, der Film hat sehr viele Stippen/Schnee)
Test C: Bestimmung der Teilchengrößeverteilung mittels Ultrazentrifuge, wie beschrieben in H.G. Müller, Colloid Polym. Sci. 267 (1989), S. 1113-1116. Es werden die Werte der Anzahlverteilung d₁₀, d₅₀ und d₉₀ herangezogen.

### Beispiel 2 (Vergleichsbeispiel):

Hierfür wurde eine Versuchsanordnung gewählt, die sich von der erfindungsgemäßen Vorrichtung bzw. dem erfindungsgemäßen Verfahren gemäß den Ausführungsbeispielen folgendermaßen unterschied: Die als Zahnradpumpen ausgeführten Dosierpumpen 3 und 4 sowie der Mischer 5 wurden in der gleichen Anordnung wie in den erfindungsgemäßen Beispielen eingesetzt. Die Voremulsion wurde jedoch ohne weitere Homogenisierung in einem Strahldispergator den unter Beispiel 1 beschriebenen Tests A, B und C unterworfen.

### Beispiel 3 (Vergleichsbeispiel):

Hierfür wurde eine Versuchsanordnung gewählt, die sich von der erfindungsgemäßen Vorrichtung bzw. dem erfindungsgemäßen Verfahren gemäß den Ausführungsbeispielen folgendermaßen unterschied: Die als Zahnradpumpen ausgeführten Dosierpumpen 3 und 4 sowie der Mischer 5 wurden in der gleichen Anordnung wie in den erfindungsgemäßen Beispielen eingesetzt. Die Voremulsion wurde jedoch mit der Pumpe 6 (vgl. Fig. 1), zur Homogenisierung einem verstellbaren Strahldispergator mit einem Schlitz von 10 x 0,1 mm, wie in DE 199 33 440 in Fig.1 beschrieben, zugeführt. Es gab keine Rückführleitung 8 wie in Fig. 1 beschrieben. Die so hergestellte Lackemulsion wurde gemäß den unter Beispiel 1 beschriebenen Tests A, B und C untersucht.

In Tabelle 1 sind die Versuchsparameter und Ergebnisse der Ausführungsbeispiele und Vergleichsbeispiele zusammengefasst.

**Tabelle 1**

| | **Bsp.1 Versuch 1** | **Bsp.1 Versuch 2** | **Bsp.1 Versuch 3** | **Bsp. 2 Versuch 4** | **Bsp.3 Versuch 5** | **Bsp. 3 Versuch 6** |
|---|---|---|---|---|---|---|
| Durchsatz [g/min] | 200 | 400 | 800 | 400 | 200 | 800 |
| Druck Pumpe 3 [bar] | 1,4 | 5 | 18 | 5,4 | 1,8 | 13 |
| Druck Pumpe 4 [bar] | <0,2 | 1,1 | 6,6 | 1,8 | 0,2 | 4 |
| Druckabfall über Düse 7 bzw. Schlitzdüse [bar] | 7 | 8 | 10 | - | 10 | 11 |
| Test A | 1 | 1 | 1 | 5 | 5 | 2 |
| Test B | 0 | 0 | 0 | 5 | 4 | 1 |
| Test C d₁₀ [µm] | 0,0545 | 0,0531 | 0,0774 | 0,0434 | 0,0541 | 0,0596 |
| Test C d₅₀ [µm] | 0,1063 | 0,0950 | 0,2479 | 0,0740 | 0,0968 | 0,1144 |
| Test C d₉₀ [µm] | 1,5409 | 1,6811 | 1,5468 | 8,7979 | 6,3565 | 2,2777 |

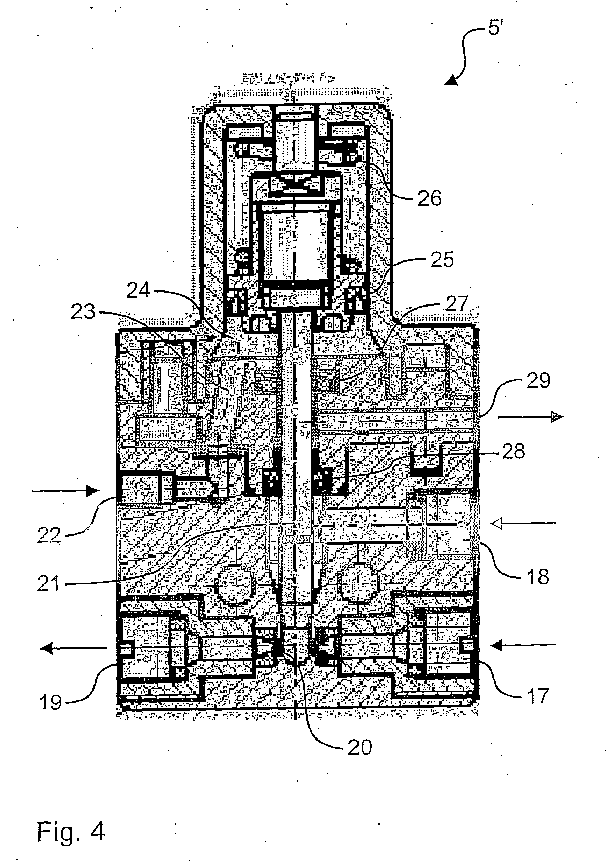

Die Querschnittsansicht in Figur 4 zeigt ein alternatives Ausführungsbeispiel eines Mischers 5', der in der Anordnung gemäß Figur 1 eingesetzt werden kann, um eine Voremulsion aus der wässrigen Bindemitteldispersion 1 und dem Polyisocyanat 2 herzustellen.

Das Polyisocyanat 2 dient hierbei als Härter und wird dem Mischer 5' über einen Anschluss 17 zugeführt, während die wässrige Bindemitteldispersion 1 dem Mischer 5' über einen weiteren Anschluss 18 zugeführt wird.

Zur Abgabe der Voremulsion 9 weist der Mischer 5' einen Anschluss 19 auf, der dem Anschluss 17 gegenüberliegt und koaxial zu dem Anschluss 17 angeordnet ist.

Der Anschluss 17 für das Polyisocyanat 2 ist über einen durchgehenden Strömungskanal mit dem Anschluss 19 für die Voremulsion 9 verbunden, wobei der Strömungskanal zwischen dem Anschluss 17 und dem Anschluss 19 eine düsenförmige Engstelle 20 aufweist, um den Druck in dem Strömungskanal zu erhöhen. Die Engstelle 20 ist hierbei in einem austauschbaren Düsenkörper angeordnet, so dass durch einen Austausch des Düsenkörpers verschiedene Querschnitte der Engstelle 20 möglich sind.

Die Zuführung der Bindemitteldispersion 1 wird hierbei durch eine Ventilnadel 21 gesteuert, die in einer Ventilbohrung verschiebbar gelagert ist und den Zugang zu dem Strömungskanal zwischen den Anschlüssen 17 und 19 in Abhängigkeit von ihrer Stellung freigibt oder versperrt. In der in Figur 4 gezeigten Stellung der Ventilnadel 21 wird der Zugang von dem Anschluss 18 zu dem Strömungskanal gesperrt, so dass dem Polyisocyanat 2 keine Bindemitteldispersion 1 zugemischt wird.

Die Ventilnadel 21 kann hierbei pneumatisch angehoben werden, um dem Polyisocyanat 2 die Bindemitteldisperion 1 zuzumischen. Hierzu weist der Mischer 5' einen Anschluss 22 auf, an den eine Steuerluftleitung angeschlossen werden kann. Der Anschluss 22 ist in dem Mischer 5' über einen Strömungskanal 23 mit einer Druckkammer 24 verbunden, wobei der in der Druckkammer 24 herrschende Druck auf einen Kolben 25 wirkt, der an der Oberseite der Ventilnadel 21 angebracht ist. Weiterhin ist eine Spiralfeder 26 vorgesehen, die sich an der Oberseite des Mischers 5' abstützt und die Ventilnadel 21 axial nach unten in Richtung der Engstelle 20 drückt. Bei einer Erhöhung des Drucks in der Druckkammer 24 wird die Ventilnadel 21 also entgegen der Federkraft der Spiralfeder 26 nach oben gedrückt, bis der Ventilsitz zwischen dem Anschluss 18 und dem Anschluss 19 freigegeben wird.

In dieser angehobenen Stellung der Ventilnadel 21 kann die Bindemitteldispersion 1 von dem Anschluss 18 in den Strömungskanal zwischen dem Anschluss 17 und dem Anschluss 19 eindringen und sich mit dem Polyisocyanat 2 vermischen.

Ferner weist der Mischer 5' zwei Dichtringe 27, 28 auf, welche die Führungsbohrung der Ventilnadel 21 abdichten, um zu verhindern, dass die über den Anschluss 18 zugeführte Bindemitteldispersion 1 entlang der Führungsbohrung der Ventilnadel 21 nach oben dringen kann.

Darüber hinaus weist der Mischer 5' eine Leckagebohrung 29 auf, über die die Bindemitteldispersion 1 abgeführt werden kann, die bei einem Versagen des unteren Dichtrings 28 entlang der Führungsbohrung der Ventilnadel 21 nach oben gedrungen ist.

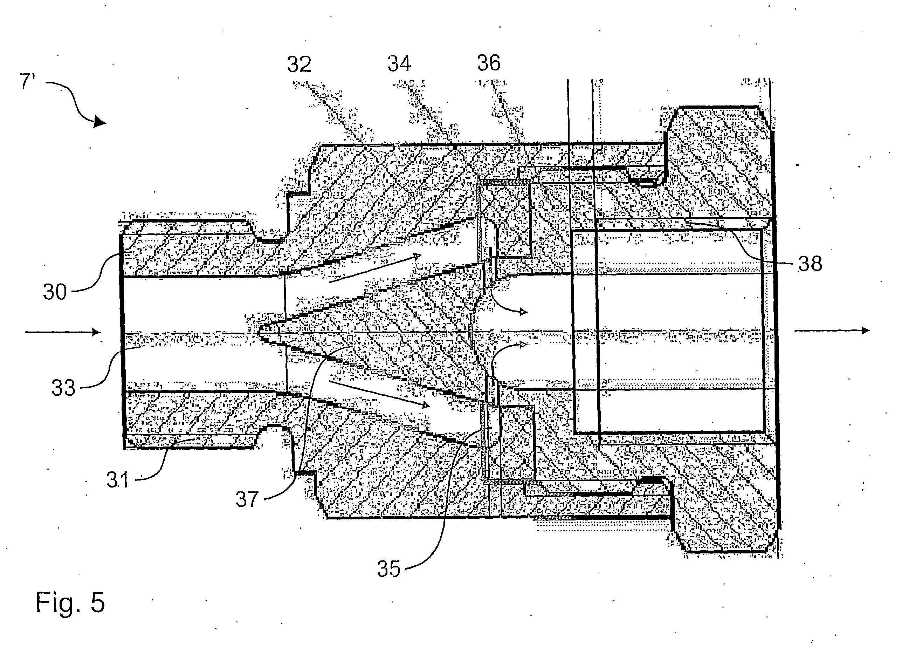

Im Folgenden wird nun anhand der Querschnittsansicht in Figur 5 eine alternative Ausführungsform des Homogenisierers 7' beschrieben, der aus der von dem Mischer 5' hergestellten Voremulsion 9 die endgültige Lackemulsion herstellt.

Eingangsseitig weist der Homogenisierer 7' zur Verbindung mit der Pumpe 6 einen Schraubflansch 30 mit einem Außengewinde 31 auf, wobei auf das Außengewinde 31 ein Schlauchflansch einer entsprechenden Zuleitung aufgeschraubt werden kann.

Der Schraubflansch 30 ist an einen Düsenkörper 32 angeformt, wobei in dem Düsenkörper 32 ein Strömungskanal 33 verläuft, der sich in Strömungsrichtung konisch erweitert.

In den Düsenkörper 32 ist eine ringförmige Düsenblende 34 eingesetzt, die an ihrer dem Schraubflansch 30 zugewandten Seite einander gegenüberliegende Radialbohrungen 35 aufweist, welche die Strömungsrichtung der in dem Strömungskanal 33 strömenden Voremulsion ändern.

Weiterhin ist in den Düsenkörper 32 ein weiterer Düsenkörper 36 eingeschraubt, der die Düsenblende 34 in dem Düsenkörper 32 fixiert und mit einem angeformten konischen Dorn 37 axial durch die Düsenblende 34 hindurch in den sich konisch erweiternden Abschnitt des Strömungskanals 33 hineinragt, wobei sich die Radialbohrungen 35 in dem Dom 37 nach innen fortsetzen.

In diesem Ausführungsbeispiel sind die Radialbohrungen 35 im Bereich des konisch zulaufenden Doms 37 angeordnet. Es ist jedoch alternativ auch möglich, dass sich die Radialbohrungen 35 in dem zylindrischen Bereich des Düsenkörpers 36 befinden.

Ausgangsseitig weist der Düsenkörper 36 ein Innengewinde 38 auf, in das ein entsprechender Anschlussflansch einer Zuleitung eingeschraubt werden kann.

Im Betrieb wird die Voremulsion also in dem Strömungskanal 33 durch die Radialbohrungen 35 in der Düsenblende 34 gedrückt und dadurch homogenisiert.

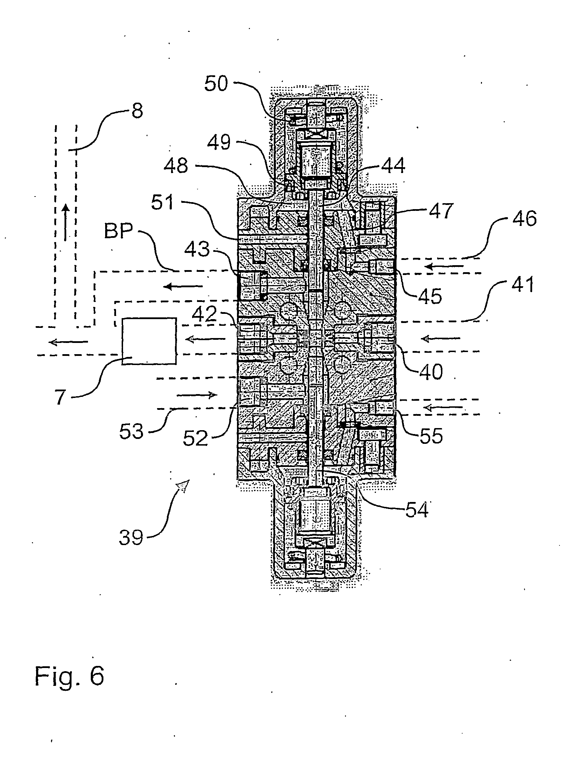

Im Folgenden wird nun anhand der Querschnittsansicht in Figur 6 eine Variante der in Figur 1 gezeigten erfindungsgemäßen Vorrichtung beschrieben, bei der eine Bypass-Leitung BP vorgesehen ist, die während des Spülbetriebs eine Umgehung des Homogenisierers 7 ermöglicht. Diese Umgehung der Homogenisierers 7 während des Spülbetriebs verhindert vorteilhaft, dass der Strömungswiderstand des Homogenisierers 7 den Spülmitteldruck stromabwärts hinter dem Homogenisierer 7 verringert.

Zur Vermeidung von Wiederholungen wird hierbei weitgehend auf die vorstehende Beschreibung zu Figur 1 verwiesen, wobei für entsprechende Bauteile dieselben Bezugszeichen verwendet werden, die zur Vermeidung von Wiederholungen lediglich durch ein Apostroph gekennzeichnet sind.

Stromaufwärts vor dem Homogenisierer 7 ist hierbei eine Ventileinheit 39 angeordnet, wobei die Ventileinheit 39 teilweise ähnlich aufgebaut ist wie der in Figur 4 dargestellte Mischer 5'. Es wird deshalb zur Beschreibung der Ventileinheit 39 ergänzend auf die Beschreibung zu Figur 4 hingewiesen.

Eingangsseitig weist die Ventileinheit 39 einen Anschluss 40 auf, der über eine Zuleitung 41 mit dem Mischer 5' verbunden werden kann, um die Voremulsion 9 aufzunehmen. Ausgangsseitig weist die Ventileinheit 39 einen weiteren Anschluss 42 auf, der mit dem Homogenisierer 7 verbunden ist, wobei der Homogenisierer 7 beispielsweise entsprechend Figur 3 oder 5 aufgebaut sein kann.

Die Bypass-Leitung BP geht von einem Anschluss 43 der Ventileinheit 39 aus und mündet in einem Bereich stromabwärts hinter dem Homogenisierer 7, wobei der Anschluss 43 mit einer Führungsbohrung einer Ventilnadel 44 verbunden ist. Im Spülbetrieb kann also Spülmittel über die Bypass-Leitung BP an dem Homogenisierer 7 vorbei geführt werden. Hierzu wird die Ventilnadel 44 angehoben, wie noch detailliert beschrieben wird.

Zwischen dem eingangsseitigen Anschluss 40 und dem ausgangsseitigen Anschluss 42 der Ventileinheit 39 verläuft hierbei ein durchgehender Strömungskanal, der in der Mitte zwischen dem Anschluss 40 und dem Anschluss 42 eine Engstelle aufweist.

Die Steuerung der Stellung der Ventilnadel 44 erfolgt hierbei durch einen weiteren Anschluss 45, an den eine Steuerluftleitung 46 angeschlossen ist, wobei der Anschluss 45 über einen Strömungskanal 47 in eine Druckkammer 48 mündet. Der in der Druckkammer 48 herrschende Druck wirkt auf einen Kolben 49, der an der Oberseite der Ventilnadel 44 befestigt wird und in dem Kopf der Ventileinheit 39 verschiebbar ist, wobei der Kolben 49 von einer Spiralfeder 50 nach unten vorgespannt wird. Durch eine Erhöhung des Drucks in der Druckkammer 48 kann die Ventilnadel 44 also aus der in Figur 6 dargestellten Stellung axial nach oben gehoben werden, so dass die Engstelle des Strömungskanals zwischen dem Anschluss 40 und dem Anschluss 42 nach oben freigegebenen wird.

Die Ventilnadel 44 ist hierbei in einer Führungsbohrung verschiebbar gelagert, wobei der Ringspalt zwischen der Ventilnadel 44 und der Innenwandung der Führungsbohrung durch zwei Dichtringe abgedichtet ist, wie bereits vorstehend im Zusammenhang mit der Beschreibung zu Figur 5 erläutert wurde. Ferner weist die Ventileinheit 39 eine Leckagebohrung 51 auf, die bei einem Versagen des unteren Dichtrings eine Abführung der über die Rückführleitung BP zugeführten Lackemulsion ermöglicht.

Im unteren Bereich weist die Ventileinheit 39 einen Anschluss 52 auf, der mit einer Blasluftleitung 53 verbunden ist, um die Ventileinheit 39 bei Bedarf mit Blasluft freiblasen zu können. Die Steuerung der Blasluft erfolgt hierbei wiederum durch eine Ventilnadel 54, die durch einen weiteren Anschluss 55 pneumatisch angesteuert werden kann. Die Ansteuerung der Ventilnadel 54 über den Anschluss 55 erfolgt hierbei wie im oberen Bereich der Ventileinheit 39, so dass diesbezüglich zur Vermeidung von Wiederholungen auf die vorstehende Beschreibung verwiesen wird.

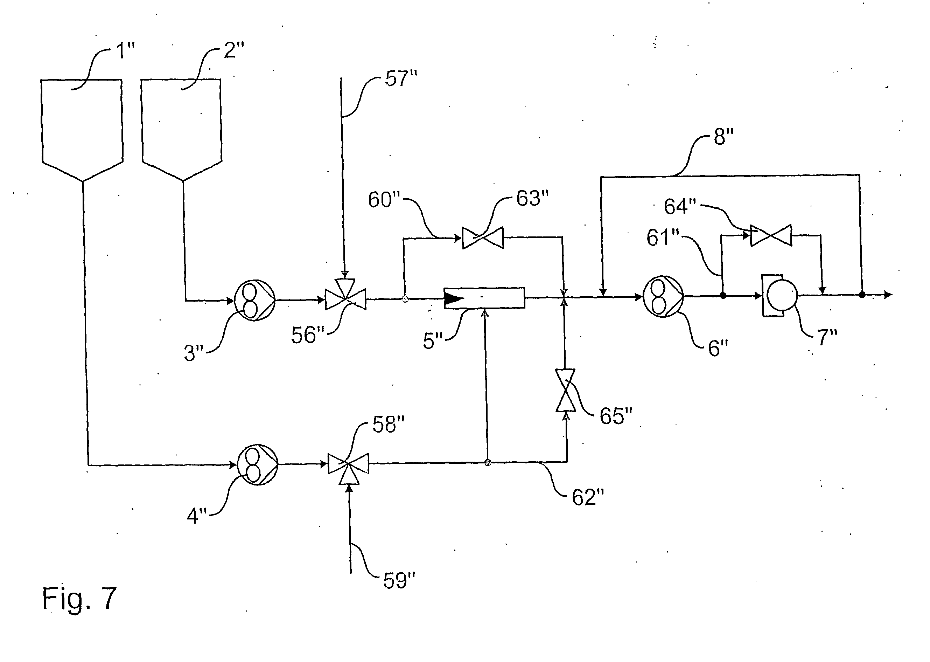

Figur 7 zeigt eine Anordnung zur Herstellung einer wässrigen Zweikomponenten-Polyurethan-Lackemulsion aus einer isocyanatreaktive Wasserstoffatome aufweisenden, wässrigen Bindemitteldispersion und einem Polyisocyanat, wobei diese Anordnung weitgehend mit der vorstehend beschriebenen und in Figur 1 dargestellten Anordnung übereinstimmt. Zur Vermeidung von Wiederholungen werden deshalb nachfolgend nur die Besonderheiten dieser Anordnung beschrieben, während ansonsten auf die vorstehende Beschreibung zu Figur 1 verwiesen wird. Weiterhin werden im Folgenden für entsprechende Bauteile dieselben Bezugszeichen wie in Figur 1 verwendet, die jedoch zur Unterscheidung durch zwei Apostrophe gekennzeichnet sind.

Eine Besonderheit dieser Anordnung besteht in der Möglichkeit einer Spülung, um Reste der Bindemittelsdispersion 1", des Polyisocyanats 2", der Voremulsion oder der fertigen Lackemulsion aus der Anordnung zu entfernen.

Hierzu ist zwischen der Dosierpumpe 3" und dem Mischer 5" ein Dreiwegeventil 56" angeordnet, das den Mischer 5" während des Lackierbetriebs mit der Dosierpumpe 3" und während des Spülbetriebs mit einer Spülmittelzuleitung 57" verbindet.

Zwischen der Dosierpumpe 4" und dem Mischer 5" ist ebenfalls ein Dreiwegeventil 58" angeordnet, das den Mischer 5" während des Lackierbetriebs mit der Dosierpumpe 4" und während des Spülbetriebs mit einer Spülmittelzuleitung 59" verbindet.

Während des Spülbetriebs führt der Strömungswiderstand des Mischers 5" und des Homogenisierers 7" normalerweise zu einer Verringerung des Spülmitteldrucks stromabwärts nach dem Mischer 5" und dem Homogenisierer 7". Zur Vermeidung dieses Nachteils sind deshalb bei dieser Anordnung Bypass-Leitungen 60", 61", 62" vorgesehen, die eine Umgehung des Mischers 5" bzw. des Homogenisierers 7" ermöglichen, um auch stromabwärts nach dem Mischer 5" bzw. dem Homogenisierer 7" einen ausreichenden Spülmitteldruck zu erreichen.

In den Bypass-Leitungen 60", 61", 62" ist hierbei jeweils ein steuerbares Ventil 63", 64" bzw. 65" angeordnet, das die Bypass-Leitung 60", 61" bzw. 62" entweder freigibt oder sperrt.

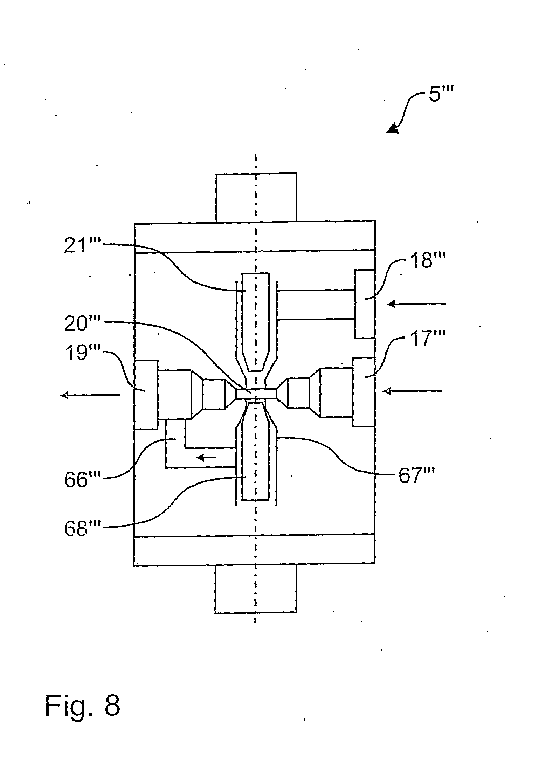

Figur 8 zeigt schließlich ein alternatives Ausführungsbeispiel eines Mischers 5"', wobei der Mischer 5'" weitgehend mit dem in Figur 4 dargestellten Mischer 5' übereinstimmt, so dass im Folgenden nur die Besonderheiten des Mischers 5'" beschrieben werden und zur Vermeidung von Wiederholungen ansonsten auf die Beschreibung zu Figur 4 verwiesen wird. Darüber hinaus werden im Folgenden für entsprechende Bauteile dieselben Bezugszeichen wie in Figur 4 verwendet, die jedoch zur Unterscheidung durch drei Apostrophe gekennzeichnet sind.

Eine Besonderheit des Mischers 5'" besteht in der guten Spülbarkeit, die durch die Engstelle 20'" nicht beeinträchtigt wird.

Hierzu weist der Mischer 5'" eine Bypass-Leitung 66'" auf, die den ausgangsseitigen Anschluss 19"' mit einer Führungsbohrung 67'" einer weiteren Ventilnadel 68'" verbindet, wobei die Führungsbohrung 67'" in die Engstelle 20'" mündet. Zur Spülung wird also die Ventilnadel 21 "' nach oben bewegt, während die Ventilnadel 68'" nach unten bewegt wird. Anschließend wird dann über den Anschluss 18"' Spülmittel zugeführt, das über die Führungsbohrung der Ventilnadel 21"' durch die Engstelle 20'" hindurch in die Führungsbohrung 67'" eintritt und dann über die Bypass-Leitung 66"' zu dem Anschluss 19"' gelangt. Die Bypass-Leitung 66'" ermöglicht also während des Spülbetriebs eine Umgehung der Engstelle 20"', so dass der Spülmitteldruck stromabwärts nach dem Mischer 5"' durch den Strömungswiderstand der Engstelle 20'" nicht beeinflusst wird.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugzszeichenliste:

- 1,1": Bindemitteldispersion
- 2,2": Polyisocyanat
- 3,3": Dosierpumpe
- 4,4": Dosierpumpe
- 5,5',5": Mischer
- 6,6": Pumpe
- 7,7": Homogenisierer
- 8,8": Rückführleitung
- 9: Voremulsion
- 10: Lackemulsion
- 11: Düsenbohrung
- 12: Vormischkammer
- 13: Düsenbohrung
- 14: ---
- 15: ---
- 16: Einsatz
- 17: Anschluss
- 18: Anschluss
- 19: Anschluss
- 20: Engstelle
- 21: Ventilnadel
- 22: Anschluss
- 23: Strömungskanal
- 24: Druckkammer
- 25: Kolben
- 26: Spiralfeder
- 27: Dichtring
- 28: Dichtring
- 29: Leckagebohrung
- 30: Schraubflansch
- 31: Außengewinde
- 32: Düsenkörper
- 33: Strömungskanal
- 34: Düsenblende
- 35: Radialbohrungen
- 36: Düsenkörper
- 37: Dom
- 38: Innengewinde
- 39: Ventileinheit
- 40: Anschluss
- 41: Zuleitung
- 42: Anschluss
- 43: Anschluss
- 44: Ventilnadel
- 45: Anschluss
- 46: Steuerluftleitung
- 47: Strömungsksnal
- 48: Druckkammer
- 49: Kolben
- 50: Spiralfeder
- 51: Leckagebohrung
- 52: Anschluss
- 53: Blasluftleitung
- 54: Ventilnadel
- 55: Anschluss
- 56": Dreiwegeventil
- 57": Spülmittelzuleitung
- 58": Dreiwegeventil
- 59": Spülmittelzuleitung
- 60": Bypass-Leitung
- 61": Bypass-Leitung
- 62": Bypass-Leitung
- 63": Ventil
- 64": Ventil
- 65": Ventil
- 66"': Bypass-Leitung
- 67"': Führungsbohrung
- 68"': Ventilnadel

## Patentansprüche

1. Verfahren zur Herstellung eines Zweikomponenten-Lackgemischs, insbesondere zur Herstellung einer wässrigen Zweikomponenten-Polyurethan-Lackemulsion aus einer isocyanatreaktive Wasserstoffatome aufweisenden, wässrigen Bindemitteldispersion und einem Polyisocyanat, mit den folgenden Schritten:
Mischung einer ersten Lackkomponente (1, 1") und einer zweiten Lackkomponente (2, 2") in einem Mischer (5, 5', 5", 5"') zu dem Zweikomponenten-Lackgemisch (9), Homogenisierung des Zweikomponenten-Lackgemischs (10) durch einen Homogenisierer (7, 7', 7"), **dadurch gekennzeichnet, dass** mindestens ein Teil des Zweikomponenten-Lackgemischs (10) in dem Homogenisierer (7, 7', 7") mehrfach hintereinander homogenisiert wird und wobei ein Teil des Zweikomponenten-Lackgemischs vom Ausgang des Homogenisierers (7, 7', 7") zum Eingang des Homogenisierers (7, 7', 7") zurückgeführt wird.

2. Verfahren nach Anspruch 1, **dadurch gekennzeichnet, dass** die beiden Lackkomponenten (1, 1", 2, 2") dem Mischer (5, 5', 5", 5"') getrennt voneinander mit einem Druck von maximal 2,5 MPa zugeführt werden.

3. Verfahren nach einem der vorhergehenden Ansprüche, **dadurch gekennzeichnet, dass** die erste Lackkomponente (1, 1") eine isocyanatreaktive Wasserstoffatome aufweisende, wässrige Bindemitteldispersion ist, während die zweite Lackkomponente (2, 2") Polyisocyanat enthält.

4. Verfahren nach einem der vorhergehenden Ansprüche, **dadurch gekennzeichnet, dass** das Zweikomponenten-Lackgemisch (9) zwischen dem Mischer (5, 5', 5", 5"') und dem Homogenisierer (7, 7', 7") einen Massenstrom von 50 g/Minute bis 3000 g/Minute aufweist.

5. Verfahren nach einem der vorhergehenden Ansprüche, **dadurch gekennzeichnet, dass** der Homogenisierer (7, 7', 7") ein Strahldispergator ist.

6. Verfahren nach einem der vorhergehenden Ansprüche, **dadurch gekennzeichnet,**
**dass** die erste Lackkomponente (1, 1") dem Mischer (5, 5', 5", 5"') durch eine erste Pumpe (4, 4") zugeführt wird, und/oder
**dass** die zweite Lackkomponenten (2, 2") dem Mischer (5, 5', 5", 5"') durch eine zweite Pumpe (3, 3") zugeführt wird, und/oder
**dass** das Zweikomponenten-Lackgemisch (9) durch eine dritte Pumpe (6, 6") von dem Mischer (5, 5', 5", 5"') zu dem Homogenisierer (7, 7', 7") gefördert wird.

7. Verfahren nach Anspruch 6, **dadurch gekennzeichnet, dass** die dritte Pumpe (6, 6") mit einer größeren Förderleistung betrieben wird als die erste Pumpe (4, 4") und die zweite Pumpe (3, 3") zusammen.

8. Verfahren nach Anspruch 6 oder 7, **dadurch gekennzeichnet, dass** mindestens eine der Pumpen (3, 3", 4, 4", 6, 6") eine Zahnradpumpe ist.

9. Vorrichtung zur Herstellung eines Zweikomponenten-Lackgemischs, insbesondere zur Herstellung einer wässrigen Zweikomponenten-Polyurethan-Lackemulsion aus einer isocyanatreaktive Wasserstoffatome aufweisenden, wässrigen Bindemitteldispersion und einem Polyisocyanat, mit
einem Mischer (5, 5', 5", 5"') zur Erzeugung des Zweikomponenten-Lackgemischs (9) durch Mischung einer ersten Lackkomponente (1, 1") und einer zweiten Lackkomponente (2, 2") sowie mit
einem Homogenisierer (7, 7', 7") zur Homogenisierung des Zweikomponenten-Lackgemischs (9), wobei der Homogenisierer (7, 7', 7") dem Mischer (5, 5', 5", 5"') stromabwärts nachgeordnet ist, **gekennzeichnet durch** eine Rückführleitung (8, 8'), die im Ausgangsbereich des Homogenisierers (7, 7', 7") abzweigt und im Eingangsbereich des Homogenisierers (7, 7', 7") ausmündet, um einen Teil des von dem Homogenisierer (7, 7', 7") homogenisierten Zweikomponenten-Lackgemischs für eine erneute Homogenisierung zurückzuführen.

10. Vorrichtung nach Anspruch **9, gekennzeichnet durch** eine erste Pumpe (4, 4") zur Förderung der ersten Lackkomponente (1, 1"), wobei die erste Pumpe (4, 4") über eine erste Zuleitung mit dem Mischer (5, 5', 5", 5"') verbunden ist, und eine zweite Pumpe (3, 3") zur Förderung der zweiten Lackkomponente (2, 2"), wobei die zweite Pumpe (3, 3") über eine zweite Zuleitung mit dem Mischer (5, 5', 5", 5"') verbunden ist, und eine dritte Pumpe (6, 6") zur Förderung des Zweikomponenten-Lackgemischs (9), wobei die dritte Pumpe (6, 6") zwischen dem Mischer (5, 5', 5", 5"') und dem Homogenisierer (7, 7', 7") angeordnet ist.

11. Vorrichtung nach Anspruch **10, dadurch gekennzeichnet, dass** die dritte Pumpe (6, 6") eine größere Förderleistung aufweist als die erste Pumpe (4, 4") und/oder die zweite Pumpe (3, 3").

12. Vorrichtung nach Anspruch **10** oder Anspruch **11, dadurch gekennzeichnet, dass** die erste Pumpe (4, 4") und/oder die zweite Pumpe (3, 3") und/oder die dritte Pumpe (6, 6") einen Förderdruck aufweist, der maximal 2,5 MPa beträgt.

13. Vorrichtung nach einem der Ansprüche **10** bis **12, dadurch gekennzeichnet, dass** die erste Pumpe (4, 4") und/oder die zweite Pumpe (3, 3") und/oder die dritte Pumpe (6, 6") eine Zahnradpumpe ist.

14. Vorrichtung nach einem der Ansprüche **10 bis 13, dadurch gekennzeichnet, dass** in der ersten Zuleitung und/oder in der zweiten Zuleitung und/oder in der dritten Zuleitung stromaufwärts vor dem Mischer (5, 5', 5", 5"') ein Filter angeordnet ist.

15. Vorrichtung nach einem der Ansprüche **10** bis **14, dadurch gekennzeichnet, dass** der Homogenisierer (7, 7', 7") ein Strahldispergator ist.

16. Vorrichtung nach einem der Ansprüche **10** bis **15, dadurch gekennzeichnet, dass** die erste Lackkomponente (1, 1") eine isocyanatreaktive Wasserstoffatome aufweisende, wässrige Bindemitteldispersion ist, während die zweite Lackkomponente (2, 2") Polyisocyanat enhält.

17. Vorrichtung nach einem der Ansprüche **9 bis 16, dadurch gekennzeichnet, dass** die Rückführleitung (8, 8") in den Bereich zwischen dem Mischer (5, 5', 5", 5"') und der dritten Pumpe (6, 6") mündet.

18. Vorrichtung nach einem der Ansprüche **9** bis **17, dadurch gekennzeichnet, dass** der Mischer (5, 5', 5", 5"') und/oder der Homogenisierer (7, 7', 7") einen Spülmittelanschluss aufweist.

19. Vorrichtung nach einem der Ansprüche **9** bis **18, dadurch gekennzeichnet, dass** der Mischer (5, 5', 5", 5"') ein steuerbares Ventil (21-26) aufweist, das den Zustrom der ersten Lackkomponente (1, 1") und/oder den Zustrom der zweiten Lackkomponente (2, 2") und/oder die Abgabe des Zweikomponenten-Lackgemischs (10) steuert.

20. Vorrichtung nach einem der Ansprüche **9** bis **19, dadurch gekennzeichnet, dass** zur Umgehung des Mischers (5, 5', 5", 5"') und/oder des Homogenisierers (7, 7', 7") während des Spülbetriebs mindestens eine Bypass-Leitung (60", 61", 62") vorgesehen ist.

21. Vorrichtung nach Anspruch **20, dadurch gekennzeichnet, dass** in der Bypass-Leitung (60", 61", 62") ein steuerbares Ventil (63", 64", 65") angeordnet ist.

## Claims

1. Process for the production of a two-component coating mixture, more particularly for the production of an aqueous two-component polyurethane coating emulsion from a polyisocyanate and from an aqueous binder dispersion comprising isocyanate-reactive hydrogen atoms, having the following steps:
mixing a first coating component (1, 1") and a second coating component (2, 2") in a mixer (5, 5', 5", 5"') to give the two-component coating mixture (9), homogenizing the two-component coating mixture (10) by a homogenizer (7, 7', 7"), **characterized in that** at least a portion of the two-component coating mixture (10) is homogenized repeatedly in succession in the homogenizer (7, 7', 7"), with a portion of the two-component coating mixture being returned from the outlet of the homogenizer (7, 7', 7") to the inlet of the homogenizer (7, 7', 7").

2. Process according to Claim 1, **characterized in that** the two coating components (1, 1", 2, 2") are supplied to the mixer (5, 5', 5", 5"') separately from one another at a pressure of at most 2.5 MPa.

3. Process according to either of the preceding claims, **characterized in that** the first coating component (1, 1") is an aqueous binder dispersion comprising isocyanate-reactive hydrogen atoms, while the second coating component (2, 2") comprises polyisocyanate.

4. Process according to any of the preceding claims, **characterized in that** the two-component coating mixture (9) between the mixer (5, 5', 5", 5"') and the homogenizer (7, 7', 7") has a mass flow rate of 50 g/minute to 3000 g/minute.

5. Process according to any of the preceding claims, **characterized in that** the homogenizer (7, 7', 7") is a jet disperser.

6. Process according to any of the preceding claims, **characterized**
**in that** the first coating component (1, 1") is supplied to the mixer (5, 5', 5", 5"') by a first pump (4, 4"), and/or
**in that** the second coating component (2, 2") is supplied to the mixer (5, 5', 5", 5"') by a second pump (3, 3"), and/or
**in that** the two-component coating mixture (9) is conveyed by a third pump (6, 6") from the mixer (5, 5', 5", 5"') to the homogenizer (7, 7', 7").

7. Process according to Claim 6, **characterized in that** the third pump (6, 6') is operated with a greater delivery capacity than the first pump (4, 4") and the second pump (3, 3") together.

8. Process according to Claim 6 or 7, **characterized in that** at least one of the pumps (3, 3", 4, 4", 6, 6") is a gear pump.

9. Apparatus for the production of a two-component coating mixture, more particularly for the production of an aqueous two-component polyurethane coating emulsion from a polyisocyanate and from an aqueous binder dispersion comprising isocyanate-reactive hydrogen atoms, having
a mixer (5, 5', 5", 5"') for generating the two-component coating mixture (9) by mixing a first coating component (1, 1") and a second coating component (2, 2"), and also having
a homogenizer (7, 7', 7") for homogenizing the two-component coating mixture (9), the homogenizer (7, 7', 7") being disposed downstream of the mixer (5, 5', 5", 5"'), **characterized by** a return line (8, 8'), which branches off in the outlet region of the homogenizer (7, 7', 7") and opens into the inlet region of the homogenizer (7, 7', 7"), in order to return a portion of the two-component coating mixture homogenized by the homogenizer (7, 7', 7") for rehomogenization.

10. Apparatus according to Claim 9, **characterized by** a first pump (4, 4") for conveying the first coating component (1, 1"), the first pump (4, 4") being connected via a first feed line with the mixer (5, 5', 5", 5"'), and a second pump (3, 3") for conveying the second coating component (2, 2"), the second pump (3, 3") being connected via a second feed line with the mixer (5, 5', 5", 5"'), and a third pump (6, 6") for conveying the two-component coating mixture (9), the third pump (6, 6") being disposed between the mixer (5, 5', 5", 5"') and the homogenizer (7, 7', 7").

11. Apparatus according to Claim 10, **characterized in that** the third pump (6, 6") has a greater delivery capacity than the first pump (4, 4") and/or the second pump (3, 3").

12. Apparatus according to Claim 10 or Claim 11, **characterized in that** the first pump (4, 4") and/or the second pump (3, 3") and/or the third pump (6, 6") has/have a delivery pressure which amounts to at most 2.5 MPa.

13. Apparatus according to any of Claims 10 to 12, **characterized in that** the first pump (4, 4") and/or the second pump (3, 3") and/or the third pump (6, 6") is/are a gear pump.

14. Apparatus according to any of Claims 10 to 13, **characterized in that** in the first feed line and/or in the second feed line and/or in the third feed line upstream of the mixer (5, 5', 5", 5'") a filter is arranged.

15. Apparatus according to any of Claims 10 to 14, **characterized in that** the homogenizer (7, 7', 7") is a jet disperser.

16. Apparatus according to any of Claims 10 to 15, **characterized in that** the first coating component (1, 1") is an aqueous binder dispersion comprising isocyanate-reactive hydrogen atoms, while the second coating component (2, 2") comprises polyisocyanate.

17. Apparatus according to any of Claims 9 to 16, **characterized in that** the return line (8, 8") opens into the region between the mixer (5, 5', 5", 5"') and the third pump (6, 6").

18. Apparatus according to any of Claims 9 to 17, **characterized in that** the mixer (5, 5', 5", 5"') and/or the homogenizer (7, 7', 7") has a rinsing agent connection.

19. Apparatus according to any of Claims 9 to 18, **characterized in that** the mixer (5, 5', 5", 5"') has a controllable valve (21-26) which controls the inflow of the first coating component (1, 1") and/or the inflow of the second coating component (2, 2") and/or the delivery of the two-component coating mixture (10).

20. Apparatus according to any of Claims 9 to 19, **characterized in that** at least one bypass line (60", 61", 62") is provided in order to bypass the mixer (5, 5', 5", 5"') and/or the homogenizer (7, 7', 7") during rinse operation.

21. Apparatus according to Claim 20, **characterized in that** a controllable valve (63", 64", 65") is arranged in the bypass line (60", 61", 62").

## Revendications

1. Procédé pour la production d'un mélange de peinture bicomposant, en particulier pour la production d'une émulsion aqueuse de peinture polyuréthane bicomposant à base d'une dispersion aqueuse de liant comportant des atomes d'hydrogène réactifs avec des isocyanates et d'un polyisocyanate, comportant les étapes suivantes :
mélange d'un premier composant de peinture (1, 1") et
d'un deuxième composant de peinture (2, 2") dans un mélangeur (5, 5', 5", 5"'), conduisant au mélange de peinture bicomposant (9), homogénéisation du mélange de peinture bicomposant (10) par un homogénéisateur (7, 7', 7"), **caractérisé en ce qu'**on homogénéise plusieurs fois successivement au moins une partie du mélange de peinture bicomposant (10) dans l'homogénéisateur (7, 7', 7") et en renvoyant une partie du mélange de peinture bicomposant, de la sortie de l'homogénéisateur (7, 7', 7"), à l'entrée de l'homogénéisateur (7, 7', 7").

2. Procédé selon la revendication 1, **caractérisé en ce qu'**on envoie au mélangeur (5, 5', 5", 5''') les deux composants de peinture (1, 1", 2, 2") séparément l'un de l'autre sous une pression d'au maximum 2,5 MPa.

3. Procédé selon l'une quelconque des revendications précédentes, **caractérisé en ce que** le premier composant de peinture (1, 1") contient une dispersion aqueuse de liant comportant des atomes d'hydrogène réactifs avec des isocyanates, tandis que le deuxième composant de peinture (2, 2") contient un polyisocyanate.

4. Procédé selon l'une quelconque des revendications précédentes, **caractérisé en ce que** le mélange de peinture bicomposant (9) présente entre le mélangeur (5, 5', 5", 5"') et l'homogénéisateur (7, 7', 7") un débit massique de 50 g/minute à 3 000 g/minute.

5. Procédé selon l'une quelconque des revendications précédentes, **caractérisé en ce que** l'homogénéisateur (7, 7', 7") et un disperseur à jet.

6. Procédé selon l'une quelconque des revendications précédentes, **caractérisé**
**en ce que** le premier composant de peinture (1, 1") est envoyé au mélangeur (5, 5', 5", 5"') par une première pompe (4, 4"), et/ou
**en ce que** le deuxième composant de peinture (2, 2") est envoyé au mélangeur (5, 5', 5", 5"') par une deuxième pompe (3, 3"), et/ou
**en ce que** le mélange de peinture bicomposant (9) est transféré du mélangeur (5, 5', 5", 5"') à l'homogénéisateur (7, 7', 7") par une troisième pompe (6, 6").

7. Procédé selon la revendication 6, **caractérisé en ce qu'**on fait fonctionner la troisième pompe (6, 6") à un plus grand débit que la première pompe (4, 4") et la deuxième pompe (3, 3") ensemble.

8. Procédé selon la revendication 6 ou 7, **caractérisé en ce qu'**au moins l'une des pompes (3, 3", 4, 4", 6, 6") est une pompe à engrenages.

9. Dispositif destiné à la production d'un mélange de peinture bicomposant, en particulier à la production d'une émulsion aqueuse de peinture polyuréthane bicomposant à partir d'une dispersion aqueuse de liant comportant des atomes d'hydrogène réactifs avec des isocyanates et d'un polyisocyanate, comportant
un mélangeur (5, 5', 5", 5"') destiné à la production du mélange de peinture bicomposant (9) par mélange d'un premier composant de peinture (1, 1") et d'un deuxième composant de peinture (2, 2") ainsi
qu'un homogénéisateur (7, 7', 7") destiné à l'homogénéisation du mélange de peinture bicomposant (9), l'homogénéisateur (7, 7', 7") étant placé en aval du mélangeur (5, 5', 5", 5"'), **caractérisé par** un conduit de recyclage (8, 8') qui part de la zone de sortie de l'homogénéisateur (7, 7', 7") et débouche dans la zone d'entrée de l'homogénéisateur (7, 7', 7"), afin de recycler une partie du mélange de peinture bicomposant homogénéisé par l'homogénéisateur (7, 7', 7"), pour une nouvelle homogénéisation.

10. Dispositif selon la revendication 9, **caractérisé par** une première pompe (4, 4") destinée au transfert du premier composant de peinture (1, 1''), la première pompe (4, 4") étant reliée par un premier conduit d'alimentation au mélangeur (5, 5', 5", 5"'), et une deuxième pompe (3, 3") destinée au transfert du deuxième composant de peinture (2, 2"), la deuxième pompe (3, 3") étant reliée par un deuxième conduit d'alimentation au mélangeur (5, 5', 5", 5'''), et une troisième pompe (6, 6") destinée au transfert du mélange de peinture bicomposant (9), la troisième pompe (6, 6") étant disposée entre le mélangeur (5, 5', 5", 5"') et l'homogénéisateur (7, 7', 7").

11. Dispositif selon la revendication 10, **caractérisé en ce que** la troisième pompe (6, 6") présente un plus grand débit que la première pompe (4, 4") et/ou la deuxième pompe (3, 3").

12. Dispositif selon la revendication 10 ou la revendication 11, **caractérisé en ce que** la première pompe (4, 4") et/ou la deuxième pompe (3, 3") et/ou la troisième pompe (6, 6") présente(nt) une pression de transfert qui est au maximum de 2,5 MPa.

13. Dispositif selon l'une quelconque des revendications 10 à 12, **caractérisé en ce que** la première pompe (4, 4") et/ou la deuxième pompe (3, 3") et/ou la troisième pompe (6, 6") est/sont une/des pompe(s) à engrenages.

14. Dispositif selon l'une quelconque des revendications 10 à 13, **caractérisé en ce que** dans le premier conduit d'alimentation et/ou dans le deuxième conduit d'alimentation et/ou dans le troisième conduit d'alimentation un filtre est disposé en amont avant le mélangeur (5, 5', 5", 5"').

15. Dispositif selon l'une quelconque des revendications 10 à 14, **caractérisé en ce que** l'homogénéisateur (7, 7', 7") est un disperseur à jet.

16. Dispositif selon l'une quelconque des revendications 10 à 15, **caractérisé en ce que** le premier composant de peinture (1,1") contient une dispersion aqueuse de liant comportant des atomes d'hydrogène réactifs avec des isocyanates, tandis que le deuxième composant de peinture (2, 2") contient un polyisocyanate.

17. Dispositif selon l'une quelconque des revendications 9 à 16, **caractérisé en ce que** le conduit de recyclage (8, 8") débouche dans la zone entre le mélangeur (5, 5', 5", 5"') et la troisième pompe (6, 6'') .

18. Dispositif selon l'une quelconque des revendications 9 à 17, **caractérisé en ce que** le mélangeur (5, 5', 5", 5"') et/ou l'homogénéisateur (7, 7', 7") comporte (nt) un raccord pour fluide de rinçage.

19. Dispositif selon l'une quelconque des revendications 9 à 18, **caractérisé en ce que** le mélangeur (5, 5', 5", 5"') comporte une vanne commandable (21-26), qui commande le flux d'arrivée du premier composant de peinture (1, 1'') et/ou le flux d'arrivée du deuxième composant de peinture (2, 2") et/ou la décharge du mélange de peinture bicomposant (10) .

20. Dispositif selon l'une quelconque des revendications 9 à 19, **caractérisé en ce qu'**au moins un conduit de dérivation (60", 61", 62") est prévu pour le contournement du mélangeur (5, 5', 5'', 5''') et/ou de l'homogénéisateur (7, 7', 7") pendant l'opération de rinçage.

21. Dispositif selon la revendication 20, **caractérisé en ce qu'**une vanne commandable (63'', 64", 65") est disposée dans le conduit de dérivation (60", 61", 62").
